# EUROPEAN PATENT APPLICATION

(11) **EP 4 374 820 A1**
(43) Date of publication of application: **29.05.2024**
(21) Application number: 22209844.4
(22) Date of filing: 28.11.2022
(51) Int. Cl.: A61C 17/00, A61C 9/00

(54) **PERSONAL CARE DEVICE WITH INTEGRATED CAMERA**

(71) Applicant: Koninklijke Philips N.V., 5656 AG Eindhoven (NL)
(72) Inventor: JOHNSON, Mark Thomas, Eindhoven (NL); GERHARDT, Lutz Christian, Eindhoven (NL); VAREKAMP, Christiaan, Eindhoven (NL); PERRONE, Antonio Luigi, Eindhoven (NL)
(74) Representative: Philips Intellectual Property & Standards

(57) **Abstract**

A personal care device comprises an illumination system for projecting a known illumination pattern onto a surface to be imaged and an image sensor for capturing images of the surface to be imaged. The illumination pattern is detected in the captured images and an orientation of the surface to be imaged is derived from a shape of the illumination pattern.

## Description

### FIELD OF THE INVENTION

This invention relates to personal care devices, and in particular devices which incorporate an imaging function, for example to provide feedback about the effectiveness of the personal care function or to enable other diagnostic assessments to be made.

### BACKGROUND OF THE INVENTION

There is trend to integrate cameras or other image sensors into personal care devices. For example, cameras are known integrated into devices such as powered toothbrushes, shaving devices, intense pulsed light (IPL) hair removal devices and other skin care devices such as skin cleansing brushes.

Such imaging-assisted personal care devices can be an enabler for remote image-based diagnostics, superior location sensing, therapy planning (e.g. orthodontics, aligners in oral care) or treatment monitoring (e.g. periodontal disease).

The imaging function can be seamlessly integrated into the normal regular personal care routine of a user, instead of requiring the use of separate devices such as smartphones or handheld intraoral scanners.

It is desirable for the imaging function to be able to determine the orientation of the surface being imaged relative to the personal care device. This is because personal care devices often have relative orientations at which they function best and relative orientations at which they may not function as well. As such, knowledge of the orientation of the surface being imaged is important for intervening in the function of such personal care devices.

Additionally, it is desirable for the imaging function to enable 3D modelling of the surface being imaged, so that surface contours can be analyzed, and/or so that more accurate location sensing is enabled. One approach for 3D imaging is to provide a camera with an image sensor and a depth sensor, and also with an inertia monitoring unit so that the position and orientation of the camera relative to the object being imaged is obtained. A 3D image can then be constructed from multiple 2D images (+ depth) from different and known viewpoints.

Another known approach for reconstructing 3D shapes of human tissue is to project 2D calibration grids or structured light patterns onto the tissue surface and to process 2D images of these patterns to derive 3D information. However, this requires large and/or multiple projector systems or additional laser source(s) to generate the required interference patterns. Such approaches are thus not suitable for compact integration into a handheld personal care device.

Moreover, the movement of handheld devices, as well as the movement of the object (i.e. person) being imaged, means a 3D reconstruction using 2D images with superposed distorted light patterns, or with device orientation measurement using an inertia measurement unit, is not accurate and will suffer from drift.

There is therefore a need for a simple solution to enable the determination of the orientation of a surface being imaged relative to the personal care device. Additionally, there is a need for a simple solution to measure the distance to the surface (e.g. to enable determination of magnification factors) and optionally even enable 3D modeling of a surface imaged by an imaging system which can be integrated into a personal care device.

### SUMMARY OF THE INVENTION

The invention is defined by the claims.

According to examples in accordance with an aspect of the invention, there is provided a personal care device comprising:
a head for providing a personal care function to a tissue surface;
an illumination system in the head for projecting a known illumination pattern onto a surface to be imaged;
an image sensor in the head capturing images of the surface to be imaged;
a processor which is configured to:
   detect the illumination pattern in the captured images; and
   derive an orientation of the surface to be imaged from a shape of the illumination pattern.

This device makes use of an on-board illumination system for providing a pattern of illumination which is then imaged by an on-board image sensor. The positional relationship between the illumination system and the image sensor is known, so that the sensed shape of the illumination pattern can be used to identify (at least) the orientation of the surface to be imaged. This information may be used to determine the manner in which the personal care device is being used, which may be used to provide feedback or guidance to the user.

The personal care device is for example a toothbrush or shaver.

In a first set of examples, the illumination system comprises a light source and a collimating lens. The collimating lens projects a fixed pattern (i.e. fixed size and shape) to all depths. Thus, at any depth, the deformation of the pattern is indicative of the orientation of the surface being imaged. In some examples, the position of the pattern within the field of view of the image sensor may be used to derive depth information.

In a second set of examples, the illumination system comprises a light source and a lens system for creating a depth-focused light beam and the processor is further configured to derive a distance to the surface to be imaged from a size of the illumination pattern.

In this way, depth information may be obtained as well as surface orientation information. The distance away from a focal plane of the pattern will influence the size of the pattern (because it will have different degrees of defocus). The depth information may then be used to create a more accurate 3D model of the surface being imaged.

The known illumination pattern may be a single, unitary, shape. The single shape may be a closed shape (e.g. a circle or square) and it may be solid or just a shape outline. As such, only the single, unitary, shape needs to be analyzed and the rest of the image is not covered by the illumination pattern. For example, the illumination pattern generally covers less than half of the image or less than a quarter of the image.

The processor may be further configured to derive a distance between the head and the surface to be imaged from a position, size and/or shape of the illumination pattern, for example using the approaches outlined above.

When there is a spacing between the illumination system and the image sensor, the illumination pattern will appear in different positions in the image based on the depth of the surface being imaged.

In some cases, the illumination pattern may be larger (and more de-focused) as the depth increases. Thus, the size of the pattern can be used to determine the depth. Similarly, the shape of the pattern may change with depth.

As such, depth can be determined with only the use of an illumination system and an image sensor.

The processor may be further configured to determine an up to scale point cloud of the surface to be imaged by applying structure from motion to the captured images and scaling the up to scale point cloud using the distance between the head and the surface to be imaged.

Generation of point clouds from moving images is a known concept. However, it only generates up to scale point clouds (with no absolute measurements). In this case, a single depth measurement tied to a given direction corresponding to an image pixel can be used to provide the scaling for the point cloud, thereby enabling the geometry of the surface being imaged to be found.

The lens system may comprise a plurality of lenses for creating a set of depth-focused light beams. In this way, the depth resolution is improved, with different light beams being used for identifying different depths.

The set of different depth-focused light beams may comprise depth-focused light beams each with different focus depths. However, there may be depth-focused light beams with a plurality of different focus depths, and with a plurality of focused light beams for at least one focus depth. These multiple beams with the same focus depth may be used to determine more macroscopic topography of surface tissues.

The illumination system may comprise a light source and a lens system for creating a pattern which is in focus at all depths of interest but has a different pattern size at different depths. In this way, different pattern sizes (rather than different amounts of defocus) may be used to encode depth information. The lens system for example then comprises an axicon lens for creating an annular illumination pattern.

In all examples, the processor may be further configured to derive an orientation of the surface to be imaged at times of relatively low motion of the personal care device or relatively low motion of the personal care device relative to the surface to be imaged. The motion of the personal care device is for example an inherent device motion caused by an actuator inside the device, rather than user motion of the device along the tissue surface. The imaging at times of low inherent motion reduces noise caused by motion of the device.

In one example, the head comprises an actuator which is moved with an operating frequency, and the illumination system comprises a strobed light source which is strobed at the operating frequency of the actuator. In this way, the movement is movement caused by operation of the personal care device itself, rather than movement imparted by a user.

In all examples, the illumination system may further comprise a steering system for steering the illumination pattern over time. This enables scanning of the surface, to provide an increased resolution image.

The personal care device may comprise a motion sensor for sensing motion of the personal care device and a proximity sensor for sensing the surface to be imaged. This enables the distance and orientation to the surface to be imaged to be tracked.

The processor may be further configured to predict motion of the personal care device from the image analysis. This may be achieved without the need for other sensor based localization technologies.

The invention also provides a method of imaging a surface using a personal care device which comprises a head, an illumination system in the head for projecting a known illumination pattern onto a surface to be imaged and an image sensor in the head, the method comprising:
receiving images captured by the image sensor;
detecting the illumination pattern in the captured images; and
deriving an orientation of the surface to be imaged from a shape of the illumination pattern

The method may further comprise deriving a distance to the surface to be imaged from a size of the illumination pattern, wherein the illumination pattern comprises:
a depth-focused light beam; or
a pattern which is in focus at all depths of interest but has a different pattern size at different depths.

The invention also provides a computer program comprising computer program code means which is adapted, when said program is run on a computer, to implement the method above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows schematically a personal care device;
Fig. 2 shows the imaging system of the personal care device as a view from above (top image) and as a side view (bottom image);
Fig. 3 shows a first example of the imaging system;
Fig. 4 shows a second example of the imaging system;
Fig. 5 shows a third example of the imaging system;
Fig. 6 shows a fourth example of the imaging system;
Fig. 7 shows a plot of angle and of angular velocity of a toothbrush head and the associated motor drive signals;
Fig. 8 shows timings in the angle and angular velocity plot when the illumination pattern is generated and the image capture takes place; and
Fig. 9 shows a method of imaging a surface using a personal care device.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a personal care device which comprises an illumination system for projecting a known illumination pattern onto a surface to be imaged and an image sensor for capturing images of the surface to be imaged. The illumination pattern is detected in the captured images and (at least) an orientation of the surface to be imaged is derived from a shape of the illumination pattern.

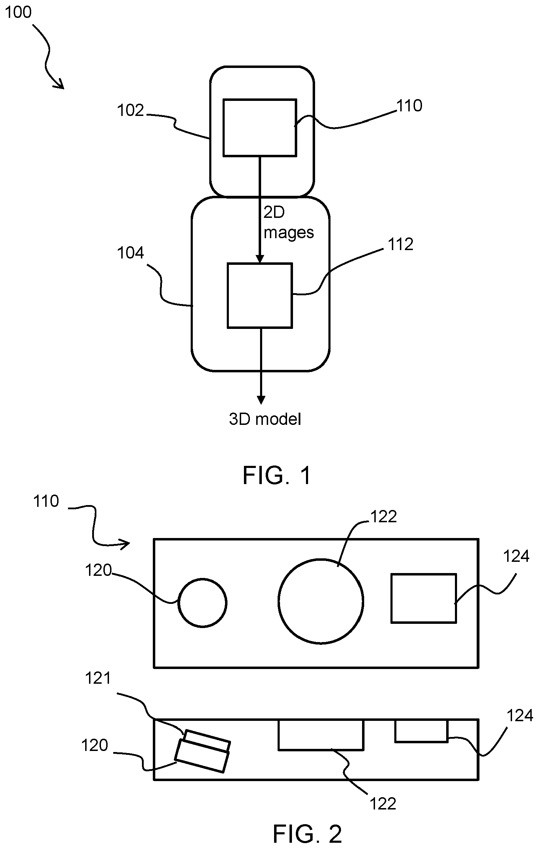

Fig. 1 shows schematically a personal care device 100 comprising a head 102 and a handle 104. The head 102 provides a personal care function to a tissue surface. The personal care function may be tooth cleaning (and the head is a toothbrush head or oral irrigator head), shaving or hair trimming (and the head is the head of a shaver or hair trimmer), hair removal (and the head is an epilator head or an intense pulsed laser treatment head), hair brushing (and the head is a brush head), or indeed any other personal care function which interacts with a tissue surface of the user.

The personal care device can be entirely conventional in respect of the personal care function, and for this reason a detailed discussion will not be provided of the normal architecture and operation of the personal care device, e.g. powered toothbrush or electric shaver.

The head has an imaging system 110 for capturing 2D images and these are supplied to a processor 112. The imaging system projects a known illumination pattern onto the surface to be imaged and captures images, and the processor detects the illumination pattern in the captured images and derives an orientation of the surface to be imaged from a shape of the illumination pattern. The processor 112 could also execute a 3D reconstruction algorithm to produce 3D maps of body surfaces using the captured images and characteristics of the illumination pattern in the captured images.

In particular, the size and/or shape of the of the illumination pattern will vary as a function of the distance between the imaging system and the surface onto which the illumination pattern is projected (i.e., the depth of the surface relative to the imaging system). This would provide an absolute measurement of depth.

If a circle is projected onto a sloping surface, the distance can be derived from the degree of asymmetry of the formed ellipse-based shape - this asymmetry is thus a characteristic of the shape of the illumination pattern. There will be a very large asymmetry if the surface is close and a small asymmetry if the surface is far away. Similarly, if a square is projected onto a sloping surface, the ratio of the lengths of opposing edges of the square provide an indicator of how close the surface is.

When sufficient texture features are present in the images, a set of the captured images could then be input into, for example, a structure from motion (SfM) algorithm which would output an up to scale point cloud of the structure being imaged. Thus, the 3D reconstruction could be achieved by using the up to scale point cloud and scaling said point cloud using the absolute measurement of depth. For example, a mesh could be generated based on the scaled point cloud.

Fig. 2 shows the imaging system 110 as a view from above (top image) and as a side view (bottom image). The imaging system 110 comprises an illumination system comprising a light source 120 and suitable optics 121 (e.g. lenses, apertures, pinholes etc.) for projecting the known illumination pattern onto the surface to be imaged and an image sensor 122 in the head which is spatially offset from the illumination system. The image sensor captures images of the surface to be imaged. Fig. 2 also shows an optional motion sensor 124 such as an inertia monitoring unit.

In one example, the illumination system 120, 121 projects a circular dot onto the surface and the processor analyses the image of the projection from the offset image obtained via the image sensor 122. The center position of the resulting, approximately elliptical, shape of the dot in the image can provide a depth measurement. This is because the relative pose of the illumination system 120, 121 and the image sensor is known and thus the depth can be obtained via triangulation.

A second method for determining the depth could be to the measure the size of the dot. In some cases, the illumination system 120, 121 may project a shape which decreases in size as the depth increases. Thus, by measuring the size of the projected dot in the images, the depth can be determined.

Generally, depth can be determined when the illumination system 120, 121 projects a shape whose geometry and/or position predictably changes with depth.

In this example, the surface orientation, with respect to the optical axis of the image sensor 122, can be calculated from the orientation of the ellipse and/or from the ratio of the minor axis and the major axis of the ellipse. The surface orientation calculation may be ambiguous since, for a given ellipse shape, two solutions could be equally likely for surface orientation. By combining measurements of the moving image sensor 122 over time, this ambiguity can be likely solved via filtering.

Additionally, distortions of the ellipse may indicate the surface is sloping relative to the illumination system 120, 121. An algorithm could be trained to determine a surface orientation based on the shape of ellipse, including any distortions which may be caused by sloping. For example, in order to train the algorithm, an inertial measurement unit (IMU) could be used to provide the ground truth orientation such that, after training, an IMU is no longer needed. The same concept can be applied to train an algorithm to determine depth based on the shape/size/position of the ellipse using a depth sensor for ground truth measurements.

The illumination system of the imaging system for example comprises an LED arrangement and a lens system for illuminating the tissue surface and for generating a projection pattern. The imaging system may instead comprise a super luminescent diode or a laser diode and a simple focusing system may be used instead of lenses, such as apertures or a pinhole to generate the illumination pattern.

The illumination system is for example at an angle relative to the image sensor. The image sensor may comprise a camera or a CMOS sensor used to acquire images from the tissue surfaces.

The pattern may comprise a pattern of light dots, crosses, diamonds, slits, stars, parallelograms, circular rings, etc. and they are used as a means to reconstruct 3D images from multiple 2D images.

The pattern may comprise a single unitary shape (solid or hollow). In this case, a simple, singular shape can be used to obtain the orientation and the depth of the surface.

One or more of the position, size and shape of the illumination pattern may be used to enable computationally efficient 3D image reconstruction, for example of the outer skin or the oral cavity. The illumination system and image sensor are offset relative to each other (in spatial position and, optionally, in direction angle) so that triangulation can be used to calculate the depth for an imaged point. The larger the distance between the illumination system and the image sensor position, the more accurate the depth measurement will be.

If a 3D reconstruction is desired, the captured images (over time) can be used to generate an up to scale point could using a SfM algorithm as discussed above. The depth measurement can then be used to scale the point cloud

For example, if the illumination source of a shaver projects a guidance dot on the skin, the intensity and shape of the dot will change depending on the orientation and distance of the shaver to the skin and the relative movement of the shaver in space. The shaving may produce a 3D trajectory such as a spiral pattern if the user shaves in the recommended fashion of repeated small circular motion trajectories.

Motion of the device such as this will result in dynamic in-plane or out-of-plane changes of shape and/or intensity of the illumination pattern (e.g. light dots may change from round to oval, or bright to less bright, or show an asymmetric distortion if a sloped plane is imaged). The captured information enables the 3D topographical profile of the imaged surface to be determined (as well as the orientation of the device relative to skin surface). All of this information may be used to perform 3D reconstruction. The 3D reconstruction results can remain sparse, i.e. having 3D positions for a sparse set of points, or may be converted to a dense 3D model e.g. via conversion of a point cloud to a mesh representation.

When an optional motion sensor is used, the combination of device motion and orientation with the image analysis enables a more accurate 3D reconstruction to be made. The inertia monitoring unit (IMU) provides a reference coordinate system (i.e. relative to the gravity vector). In particular, the accuracy of SfM algorithms can sometimes suffer when the movements of the camera are relatively small. As such, the IMU could provide more accurate position information on the cameras (at the time when images were taken) such that the accuracy of the point cloud increases.

It is worth noting that SfM algorithms tend to assume that the structure being imaged is stationary. As such, it is preferable to only use a subset of the captured images, taken over a relatively small time window (e.g., 20 frames over 2 seconds). Of course, the exact time window will depend on how the personal care device is typically used (e.g., how fast, over how long etc.).

In some cases, it may be sufficient to determine the relative orientation of the surface being imaged. For example, when the personal care device functions best at certain orientations relative to the surface (e.g., parallel to the surface), knowledge of the relative orientation is sufficient to adapt the personal care device accordingly (e.g., turn off at inadequate orientations).

However, in other cases, it may be preferable to extract feature points from the captured images (e.g., texture features on teeth, hair follicles etc.) and track these features over time and use structure from motion to determine the 3D position of these features. In addition, these features could provide more context to the orientation and/or depth measurements. For example, knowledge of the 3D positions of the features in combination with independent measurement of the device's depth relative to the surface may enable one to determine whether a change in orientation and/or depth is due to motion of the personal care device or due to motion of the structure being imaged.

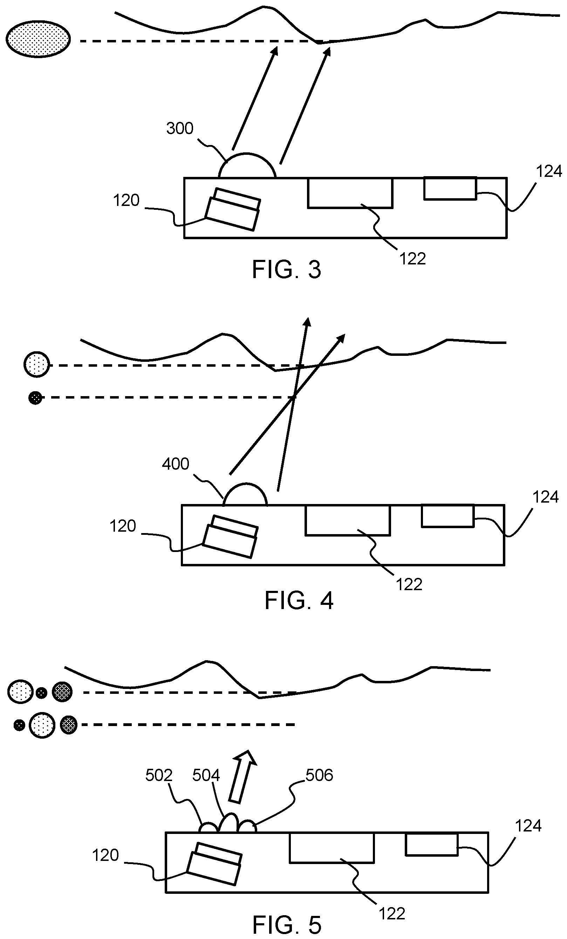

Fig. 3 shows a first example of the imaging system.

The illumination system comprises the light source 120 and a collimating lens 300. The collimating lens 300 generates a collimated light beam that allows for tracking and tilt measurement. The collimating lens may be provided as part of a simple transparent plastic molded window with a microlens structure.

In a most basic implementation, the illumination pattern comprises a pattern of dots (instead of a more complicated structured light pattern) and this simplifies the image reconstruction and thereby can save computational power. Any change of shape and intensity of a projected dot (e.g. round vs. oval, bright vs. less bright) provides information on 3D topographical profile of imaged surface.

Specifically, if the shape of the collimated beam is a circular dot, the projection onto a surface perpendicular to the imaging device will result in a circular feature in the image. In contrast, projection onto a surface at an angle to the imaging device will result in an elliptical feature in the image as represented in Fig. 3.

The ratio between the long and short axis of the ellipse is a measure of the angle, whilst the direction of the axes is a measure of the direction of the slope.

The position of the projected dot can provide an indication of the depth of the surface. This is because the illumination system is spaced from the image capture system. As such, the larger the depth, the closer the dot is to the center of the image, and the smaller the depth, the closer the dot is to the edge of the image.

Fig. 4 shows a second example in which the illumination system comprises the light source 120 and a lens system 400 for creating a depth-focused light beam. A simple transparent plastic molded window with a microlens structure may again be used, but in this example to generate a depth-focused light beam. This allows for assessment of the distance of the surface to be imaged from the imaging device.

Specifically, the fact that the beam is no longer collimated allows a translation of the size or the intensity of the spot into a distance from the image sensor. For example, a tissue surface at a distance equal to the focal length of the lens will result in a small spot of high intensity. In contrast, when moving away from the focus point, the spot will have a larger size and lower intensity. This is represented in Fig. 4.

If the surface is also tilted relative to the imaging sensor, the spot will again distort in a manner similar to that described above.

However, in this case, the distorted ellipse will form with the part with long axis closer to the imaging device being narrower than that further away. Thus, the ellipse will distort in an asymmetric manner as a result of being projected onto a tilted surface. Thus, one can infer the surface is tilted based on the asymmetric shape of the ellipse. Further, the asymmetric shape can be used to further calculate the orientation of the tilted surface.

In this case, the best measure of the distance to the device is given by the length of the short axis, as this is the distance to the center of the spot. Indications of the local geometry can be obtained by analysis of the asymmetry of the ellipse.

One of the issues of this approach is that the spot size will be the same for tissue surfaces at the same distance before and after the focal point. This uncertainty can be addressed by providing a lens system with a plurality of lenses for creating a set of depth-focused light beams.

Multiple lens structures of the type shown in Fig. 4 may be combined, even within a single microlens structure, as shown in Fig. 5.

There are now three lenses 502, 504, 506 with different focal lengths. This enables the distance from the imaging system device to the surface to be determined more accurately. For example, if there are three different focal planes (as shown in Fig. 5), the tissue distance is closest to the lens focus with the smallest image (in this case the middle lens). Furthermore, the pattern of the three lenses will also indicate if the surface being imaged is in front of, or behind, the focal spot of the lenses.

Fig. 5 shows three lenses all with different focal lengths. However, multiple lenses may be provided with the same focal length. This may be used to determine more macroscopic topography of tissue surfaces, by measuring distances from these two lenses and calculating using triangulation assessment to derive the surface orientation.

For example, if three or four such lenses are applied to the periphery of the illumination area, triangulation can also be used to give an indication of the orientation of the device relative to the tissue surface.

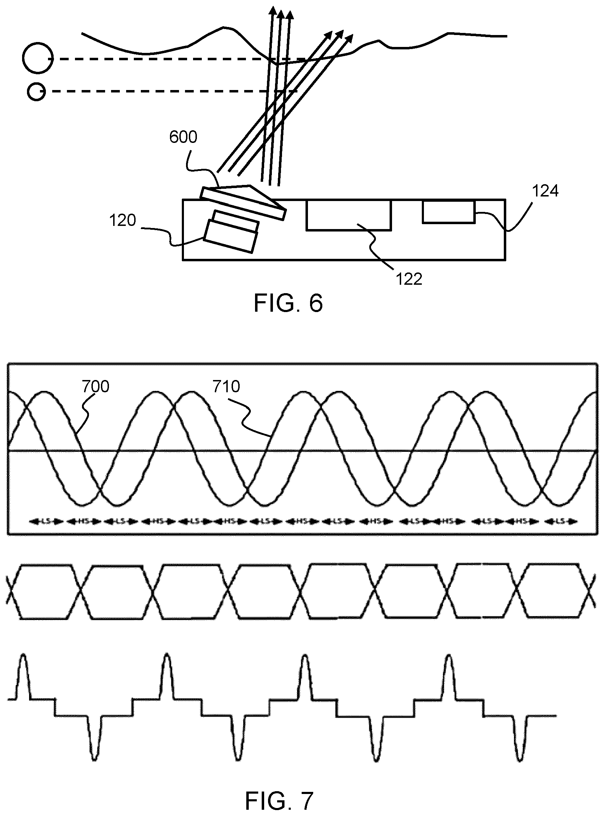

Fig. 6 shows another example in which the illumination system comprises the light source 120 and a lens system 600 for creating a pattern which is in focus at all depths of interest but has a different pattern size at different depths. The lens system for example comprises an axicon lens for ring illumination, with a constant depth focus but variable diameter. The axicon lens is a conical prism shape.

The annular light distribution has a constant ring thickness and the ring illumination stays in focus at all depths regardless of the distance to the surface, but it changes its diameter as shown in Fig. 6.

The observed ring shape provides an additional depth cue that can help in 3D surface reconstruction. Assuming that locally the perspective projection can be approximated by an orthographic projection, the image of the projected circle will be an ellipse. The orientation of the larger semi-axis and the ratio of the larger semi-axis to the smaller semi-axis can be used to calculate the surface orientation as in the examples above. Especially with a locally slow variation in 3D surface geometry, this can help to constrain the solution when this method is combined with other 3D sensor modalities such as structure from motion (SfM).

In another example, the projection of the illumination pattern and the image capture occur at still moments or at moments of low speed, when the image sensor effectively does not move.

If illumination is concentrated when the device is stationary, the image reconstruction process will be easier and faster (as much sharper illumination pattern can be used for reconstruction purposes).

The orientation (and depth, if depth is being measured) of the surface to be imaged is then determined at times of relatively low motion of the personal care device or relatively low motion of the personal care device relative to the surface to be imaged.

In one example, the motion is caused by an actuator of the device (e.g. a motor which generates a rotary or vibratory motion of a toothbrush head). The actuator creates movement with an operating frequency.

The illumination source may then be strobed at the operating frequency of the actuator.

Fig. 7 shows in the top pane a plot 700 of angle and a plot 710 of angular velocity of the toothbrush head. The middle plane shows the motor drive signal and the bottom pane shows the motor drive current.

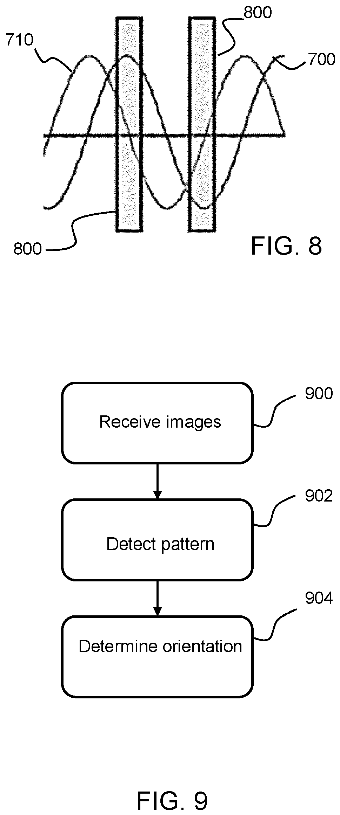

Fig. 8 shows timings 800 in the angle and angular velocity plot when the illumination pattern is generated and the image capture takes place.

This results in image stabilization and vibration compensation of a vibrating toothbrush. The timings 800 are generated by using a strobed light, flashed at the actuation frequency of the toothbrush, to correspond to low-speed areas (or zero brush head motion). This gives a sharper illumination pattern to ease image reconstruction.

In another example, the illumination system further comprises a steering system for steering the illumination pattern over time.

This approach is for example of interest if the device does not have an inherent actuator (e.g. motor, drive train, vacuum pump) that produces a vibration or periodic motion. The illumination pattern can then be steered to allow for optimal spatial sampling (in the statistical sense). In other words, this approach projects the illumination pattern over the whole (or most of) surface over time.

If an illumination pattern in the form of a dot is always projected in the same direction, then device motion, which moving the image sensor, will typically produce a linear shaped trajectory of points because the device motion is slowly varying (e.g. controlled by hand movement). At a typical image sensor acquisition frame rate of e.g. 10 Hz, a 2 second capture would result in 20 points for example lying on a straight line and concentrated in a limited part of the combined image.

To help 3D reconstruction, the dot can be steered sequentially to different locations. For example, a 3x3 LED array may be used with a pseudo-random selection of which LED to switch on per frame. In this way, the combined dot pattern over 2 seconds of acquisition will be spread out in space. An alternative to the use of a LED array is to use a fluid diffracting surface for which the orientation can be controlled.

As explained above, a motion sensor may be used to measure device motion. It is instead possible to predict motion of the personal care device from the image analysis. In particular, calibrated shapes and dimensions of the illumination pattern may be used to train an algorithm used to predict device localization.

By knowing the orientation and distance of the device to the surface to be imaged (e.g., using IMUs and depth sensors to obtain ground truth data), an algorithm can be trained to predict device localization (orientation/location and distance of device from tissue surface) for devices without the need for other sensor based localization technologies during use - i.e. simplifying the system architecture of handheld devices.

Fig. 9 shows a method of imaging a surface using a personal care device which comprises an illumination system for projecting a known illumination pattern onto a surface to be imaged. The method comprises, in step 900, receiving images captured by the image sensor. The illumination pattern is detected in the captured images in step 902 and an orientation of the surface to be imaged is derived from a shape of the illumination pattern in step 904.

There are various possible reconstruction algorithms for generating the 3D image.

As discussed above, structure-From-Motion (SfM) can be used to determine the 3D position of feature points and the camera pose over time by using the captured images over a time window. This approach assumes a static scene for the given time window. The resulting point cloud is known only up-to an unknown scale parameter. The metric 3D position of the LED/laser dot can be used to infer the true scale of the scene. Consider, for instance, 100 frames of a camera in motion. This will give 100 point measurements on the 3D surface. Due to the device motion, each dot will be at a different position relative to the image features. Assigning the 3D position of the point each of the 100 images to the spatially nearest image feature will tie the point cloud to the metric measurements.

An example feature point detector is the Scale Invariant Feature Transform (SIFT), but many others are available. Common frameworks such as Alice Vision or ColMap are examples. For a given part of the human surface a dedicated feature point detection neural network may be trained such that this module performs optimal for the given scene under the given light conditions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A personal care device (100) comprising:
a head (102) for providing a personal care function to a tissue surface;
an illumination system (120, 121) in the head for projecting a known illumination pattern onto a surface to be imaged;
an image sensor (122) in the head for capturing images of the surface to be imaged;
a processor (12) which is configured to:
detect the illumination pattern in the captured images; and
derive an orientation of the surface to be imaged from a shape of the illumination pattern.

2. The personal care device of claim 1, wherein the known illumination pattern is a single, unitary, shape.

3. The personal care device of claims 1 or 2, wherein the processor (112) is further configured to derive a distance between the head and the surface to be imaged from a position, size and/or shape of the illumination pattern.

4. The personal care device of claim 3, wherein the processor is further configured to:
determine an up to scale point cloud of the surface to be imaged by applying structure from motion to the captured images; and
scaling the up to scale point cloud using the distance between the head and the surface to be imaged.

5. The personal care device of any of claims 1 to 4, wherein the illumination system comprises a light source (120) and a collimating lens (300).

6. The personal care device of any of claims 1 to 4, wherein the illumination system comprises a light source (120) and a lens system (400) for creating a depth-focused light beam and the processor is further configured to derive a distance to the surface to be imaged from a size of the illumination pattern.

7. The personal care device of claim 6, wherein the lens system comprises a plurality of lenses (502,504,506) for creating a set of depth-focused light beams.

8. The personal care device of claim 7, wherein the set of different depth-focused light beams comprise:
depth focused light beams each with different focus depths; or
depth focused light beams with a plurality of different focus depths, and with a plurality of focused light beams for at least one focus depth.

9. The personal care device of any of claims 1 to 4, wherein the illumination system comprises a light source (120) and a lens system (600) for creating a pattern which is in focus at all depths of interest but has a different pattern size at different depths.

10. The personal care device of claim 9, wherein the lens system comprises an axicon lens for creating an annular illumination pattern.

11. The personal care device of any one of claims 1 to 10, wherein the processor is further configured to derive an orientation of the surface to be imaged at times of relatively low motion of the personal care device or relatively low motion of the personal care device relative to the surface to be imaged.

12. The personal care device of claim 11, wherein the head comprises an actuator which is moved with an operating frequency, and the illumination system comprises a strobed light source which is strobed at the operating frequency of the actuator.

13. The personal care device of any one of claims 1 to 12, wherein the illumination system further comprises a steering system for steering the illumination pattern over time.

14. A method of imaging a surface using a personal care device which comprises a head, an illumination system in the head for projecting a known illumination pattern onto a surface to be imaged and an image sensor in the head, the method comprising:
(900) receiving images captured by the image sensor;
(902) detecting the illumination pattern in the captured images; and
(904) deriving an orientation of the surface to be imaged from a shape of the illumination pattern.

15. A computer program comprising computer program code means which is adapted, when said program is run on a computer, to implement the method of claim 14.
